# EUROPÄISCHE PATENTSCHRIFT

(11) **EP 0 534 275 B1**
(45) Veröffentlichungstag und Bekanntmachung des Hinweises auf die Patenterteilung: **14.02.1996**
(21) Anmeldenummer: 92115729.3
(22) Anmeldetag: 15.09.1992
(51) Int. Cl.: A01K 59/02

(54) **Vorrichtung zum Entdeckeln von verdeckelten Honigwaben**
Uncapping device for money combs
Machine à désoperculer les cadres de ruches

(30) Priorität: 24.09.1991 DE 4131682; 22.04.1992 DE 4213156
(43) Veröffentlichungstag der Anmeldung: 31.03.1993
(73) Patentinhaber: De Clercq, Ludo, B-1120 Brussel (BE)
(72) Erfinder: De Clercq, Ludo, B-1120 Brussel (BE)
(74) Vertreter: Wasmeier, Alfons, Dipl.-Ing.

(56) Entgegenhaltungen:
- DE-C- 146 726
- FR-A- 2 253 452
- US-A- 1 523 963
- US-A- 2 448 775

## Beschreibung

Die Erfindung betrifft eine Vorrichtung nach dem Oberbegriff des Anspruches 1.

Die von den Bienen mit Wachsdeckeln verschlossenen, mit Honig gefüllten Zellen von Honigwaben werden durch Entfernen der Wachsdeckel geöffnet, damit der Honig aus den Zellen extrahiert werden kann. Dieses Entfernen der Wachsdeckel erfolgt entweder manuell unter Einsatz von Entdeckelungsgeräten, z. B. Entdeckelungsgabeln, Wabenmessern, Spachteln, Wabeneggen oder dergleichen, die auch elektrisch angetrieben sein können, oder aber maschinell bzw. vollautomatisch mit Hilfe von motorgetriebenen Entdeckelungsmaschinen. Derartige Geräte sind z. B. mit elektrisch beheizter Schneide und mit Thermostaten ausgebildet, um das Abheben der Zellendeckel durch gleichzeitiges Schmelzen und Schneiden zu vereinfachen und eine saubere und glatte Schnittfläche zu erzielen.

Der Entdeckelungsvorgang soll dabei so vorgenommen werden, daß die Honigwaben nach dem Entdeckeln ohne weitere Bearbeitungsvorgänge zum Schleudern des Honigs in entsprechende Zentrifugen oder dergleichen eingebracht werden können. Insbesondere soll der Zeitaufwand für das Entdeckeln möglichst gering sein und der Entdeckelungsvorgang soll so durchgeführt werden, daß eine Nachbearbeitung nicht erforderlich ist.

Ein bekanntes Honigwaben-Entdeckelungsgerät verwendet zum Entfernen der die Zellen der Honigwaben verschließenden Wachsdeckel einen rotierenden Zylinder mit fliegend daran aufgehängten Schlagmessern aus Metall, die die Wachsdeckel von der Oberfläche der Honigwabe abschlagen. Die zu entdeckelnde Honigwabe ist dabei in einem Führungsschlitten angeordnet und wird selbsttätig an den rotierenden Schlagmessern vorbei nach unten bewegt. Der Abstand der Wabenoberfläche bzw. der Wabendeckel zu den rotierenden Schlagmessern ist fest eingestellt und ergibt die Entdeckelungstiefe, die veränderbar zwischen etwa 20 mm und 45 mm einstellbar ist.

Ein derartiges Entdeckelungsgerät mit fliegend angeordneten Schlagmessern weist für das Entdeckeln von Honigwaben u.a. folgende entscheidenden Nachteile auf:
Da die Wabenoberfläche der verdeckelten Honigzellen häufig nicht gleichmäßig plan ist, sondern unregelmäßige Erhebungen bzw. Vertiefungen hat, ist es aufgrund des fest eingestellten Abstandes der Wabe zu den rotierenden Schlagmessern unvermeidlich, daß erhabene Oberflächenteile der Honigwabe zu weit abgeschlagen bzw. entdeckelt und tief liegende Teile zu wenig oder gar nicht entdeckelt werden. Auf diese Weise ist ein Nacharbeiten der maschinell entdeckelten Honigwaben durch zusätzliches Entdeckeln von Hand erforderlich, was einen erheblichen Zeit- und Kostenaufwand bedeutet.

Ein weiterer wesentlicher Nachteil derartiger Entdeckelungsgeräte ist darin zu sehen, daß die rotierenden Schlagmesser aus Metall an den weichen Wachszellen Beschädigungen hervorrufen, z.B. durch Zuschmieren der Zellenöffnungen. Insbesondere beim Entdeckeln von Kunststoffwaben mit voll ausgezogenen Zellen läßt sich ferner mit derartigen rotierenden Schlagmessern eine Beschädigung der Ränder der Zellenöffnungen nicht vermeiden.

Auch hat sich als nachteilig herausgestellt, daß bei rotierenden Schlagmessern aus Metall wegen der bestehenden Unfallgefahr die zu entdeckelnden Honigwaben nicht von Hand gegen die rotierenden Schlagmesser gedrückt werden können, um die Wachsdeckel entweder vollständig oder für eine Nachbearbeitung teilweise zu entfernen, sondern daß die zu entdeckelnden Honigwaben in dem Führungsschlitten festgelegt werden müssen, dessen Zustellung zu den Schlagmessern jeweils eingestellt werden muß, wenn der Abstand Deckel-Schlagmesser sich ändert; insbes. für eine Nachbearbeitung sind fortlaufende Änderungen in der Einstellung viel zu zeitaufwendig.

Aus der US-A-2 448 775 ist eine Vorrichtung zum Entdeckeln von verdeckelten Honigwaben mit einem Rahmengehäuse, einer Führungshalterung auf dem Rahmengehäuse und mindestens einer zylindrischen Bürste bekannt. Die zylindrische Bürste ist auf der Führungshalterung mit hoher Drehzahl drehbar so aufgenommen, daß sie in Eingriff mit den Deckeln der Honigwaben gebracht werden und diese beseitigen kann. Die zylindrische Bürste weist eine Vielzahl von Borstenreihen auf, wobei die Borsten über die Umfangsfläche der Bürste in parallelen, axialen Reihen gleichförmig verteilt sind. Die rotierenden Bürsten sind bei dieser Entdeckelungsvorrichtung mittels Riemen angetrieben, was belegt, daß die Antriebsdrehzahl relativ gering ist. Desweiteren sind die Borsten dieser zylindrischen Bürsten weitgehend starr und aus Metall ausgebildet.

Aufgabe der Erfindung ist es, eine gattungsgemäße Vorrichtung zum Entdecken von verdeckelten Honigwaben so auszugestalten, daß die Nachteile der vorbeschriebenen Entdeckelungsgeräte, insbesondere der Einsatz metallischer Schlagmesser entfällt, ein einwandfreies und sauberes Entdecken der Honigwaben ohne Beschädigung der Wachszellen und des Wabenmaterials sichergestellt ist, insbesondere das Entdeckeln von verdeckelten Kunststoffwaben ohne jede Beschädigung der Ränder der Zellenöffnungen möglich ist, die Vorrichtung möglichst weich und gleichförmig ohne Schlageffekt auf die verdeckelten Waben einwirkt, und im Handbetrieb eingesetzt werden kann, ohne daß eine Verletzungsgefahr besteht.

Gemäß der Erfindung wird diese Aufgabe mit den Merkmalen des Kennzeichens des Anspruches 1 gelöst. Weitere Ausgestaltungen der Erfindung sind Gegenstand der Unteransprüche.

Die motorisch angetriebene Walzenbürste besteht im Gegensatz zu vergleichbaren bekannten Bürsten, deren Borsten aus Metall hergestellt sind, aus einem Zylinder mit in radialer Richtung verlaufenden Borsten, die aus hochverschleißfestem, lebensmittelechtem Kunststoffmaterial bestehen und mit dem Zylinder fest verbunden sind. Die Borsten sind dabei in parallelen, axialen Reihen, zueinander versetzt, spiralförmig oder dgl. befestigt angeordnet. Als geeignetes Material für die Borsten hat sich z.B. Nylon, Rilsan, Polyimid oder Aramid herausgestellt. Die Erfindung schließt jedoch auch andere Kunststoffmaterialien oder kunststoffähnliche Materialien ein, aus denen elastisch auslenkbare Borsten für entsprechende Walzenbürsten hergestellt werden können. Aufgrund der Verwendung elastischer, auslenkbarer Borsten wird mit der erfindungsgemäßen Bürstenvorrichtung jede Verletzungsgefahr ausgeschaltet, die bei einer mechanischen Entdeckelung der Waben im Handbegriff ansonsten, d.h. bei Verwendung von Metall- oder Stahlborsten, auftreten kann.

Die Borstenstärke kann etwa zwischen 0,1 mm und 3 mm Durchmesser, die sichtbare Borstenlänge etwa zwischen 15 mm bis 100 mm betragen. Die Dimensionen der Borsten sind u.a. abhängig von der Rotationsgeschwindigkeit der Walzenbürste, die in der Größenordnung zwischen 750 und 6000 U/min liegt. Der Durchmesser des Walzenzylinders ohne Borsten beträgt beispielsweise zwischen 30 mm und 120 mm, während die Walzenbürste mit Borsten einen Durchmesser von etwa zwischen 60 mm und 350 mm hat.

Vorzugsweise sind die Borstenreihen der rotierenden Walzenbürste im Winkel zur Längsachse des Bürstenkörpers verlaufend auf dem Bürstenkörper gleichmäßig verteilt angeordnet.

Die Borsten der Bürsten sind bevorzugt in parallelen, axialen Reihen angeordnet. Wie die Praxis gezeigt hat, tritt dabei eine nicht unerhebliche Schlagwirkung auf, wenn die Bürste über die Wabendeckel hinwegstreicht und jeweils am auflaufenden Rand des etwas erhabenen Deckels einen Widerstand findet und verzögert wird, mit der gespeicherten Energie über den Deckel streicht und beim Verlassen des Deckels die Borsten bzw. die in den Borsten gespeicherte Bewegungsenergie freigibt, bis sie auf den nächsten Deckel auftrifft. Es erfolgt somit ein diskontinuierlicher und von Zelle zu Zelle leicht sprunghafter Bewegungsablauf, der fortgesetzte geringe Schlageffekte ergibt, die für eine einwandfreie und saubere Entdeckelung nachteilig sind und die das einwandfreie Führen der Wabe in Bezug auf das Werkzeug erheblich erschweren.

Damit wird erreicht, daß die bei parallel zur Längsachse der Bürste verlaufenden Borstenreihen auftretenden Schlagkräfte ausgeschaltet werden und ein kontinuierliches und weiches Überstreichen und Abstreifen der Deckel dadurch erfolgt, daß die Borsten aufeinanderfolgender Reihen entsprechend in Umfangsrichtung gleichmäßig gegeneinander versetzt sind, und damit die einzelnen Borsten bzw. Borstenbündel praktisch übergangslos ihre Abstreifwirkung ausüben können. Dies ermöglicht einerseits ein gleichmäßigeres Abarbeiten der Deckel, andererseits eine einfache und exakte Führung der Waben in ihrer Arbeitsposition.

Durch die Anordnung der Borsten in der vorgeschlagenen Weise tritt bei den relativ hohen Drehzahlen von ca. 3000 U/min eine Pumpwirkung innerhalb der Borstenanordnung der Bürste auf, die bewirkt, daß von der Seite Luft eingesaugt wird und dadurch keine Honigtropfen aus der Zelle an den Borsten entlang radial nach außen fließen.

Die Walzenbürste ist in Kugellagern laufend an Lagerböcken gelagert und wird von einem Elektromotor angetrieben. Die Walzenbürste und der Motor sind auf einem Edelstahl-Profilrahmen befestigt, der mit der Auffangwanne für die entdeckelten Wachsdeckel und den hierbei anfallenden Honig bestimmt ist.

Im einfachsten Fall einer erfindungsgemäßen Vorrichtung werden die Honigwaben zum Entdeckeln einzeln von Hand gegen die rotierende Walzenbürste gedrückt und langsam relativ zur Walzenbürste tangential bewegt. Die losgelösten Wachsdeckelteilchen werden dabei nach oben gegen eine transparente Abdeckhaube geschleudert oder fallen nach unten in die Auffangwanne.

Wenn der Durchsatz von zu entdeckelnden Honigwaben im Vergleich zum Handbetrieb vergrößert werden soll, werden die zu entdeckelnden Honigwaben in einen Führungsschlitten, einen verschiebbaren Führungsrahmen oder dergleichen eingesetzt, der an die rotierende Walzenbürste herangeführt wird. Dieser Führungsschlitten ist so in der Vorrichtung angeordnet, daß er mit der Honigwabe relativ zum Gestell, oder aber die Honigwabe relativ zum Führungsschlitten federnd so geführt ist, daß die zu entdeckelnde Oberseite der Honigwabe stärker oder weniger stark in den Wirkungsbereich der rotierenden Walzenbürste (von Hand) gedrückt werden kann, so daß auf diese Weise bestimmte Abschnitte der Oberfläche der Wabe bei unregelmäßiger Wabenoberfläche gezielt stärker bearbeitet werden können als andere Teile.

Für einen wesentlich höheren Durchsatz an zu entdeckelnden Honigwaben wird eine vollautomatische Verdeckelung bei großen Stückzahlen vorgeschlagen. Eine derartige Entdeckelungsmaschine besteht aus einem Förderer, der die zu verdeckelnden Honigwaben aufnimmt und sie an eine Übergabestation bringt, an der diese Honigwaben in ein Wabenkarussell, einen Umlaufförderer, eine Umlaufkette oder dergl. übergeben werden, die die einzelnen zu entdeckelnden Honigwaben nacheinander durch eine Entdeckelungsstation führen, welche zwei einander gegenüberliegende, miteinander zusammenwirkende, auf entgegengesetzte Oberseiten einer jeden einzelnen Honigwabe einwirkende Walzenbürsten aufweist, die die Entdeckelung vornehmen. Von dieser Entdeckelungsstation werden im Durchlaufverfahren die entdeckelten Honigwaben an eine Abgabestation geführt, an der die Honigwben an einen Abförderer übergeben werden, so daß damit ein kontinuierlicher und vollautomatischer Entdeckelungsvorgang erzielt wird.

Nachstehend wird die Erfindung in Verbindung mit der Zeichnung anhand von Ausführungsbeispielen erläutert. Es zeigt:

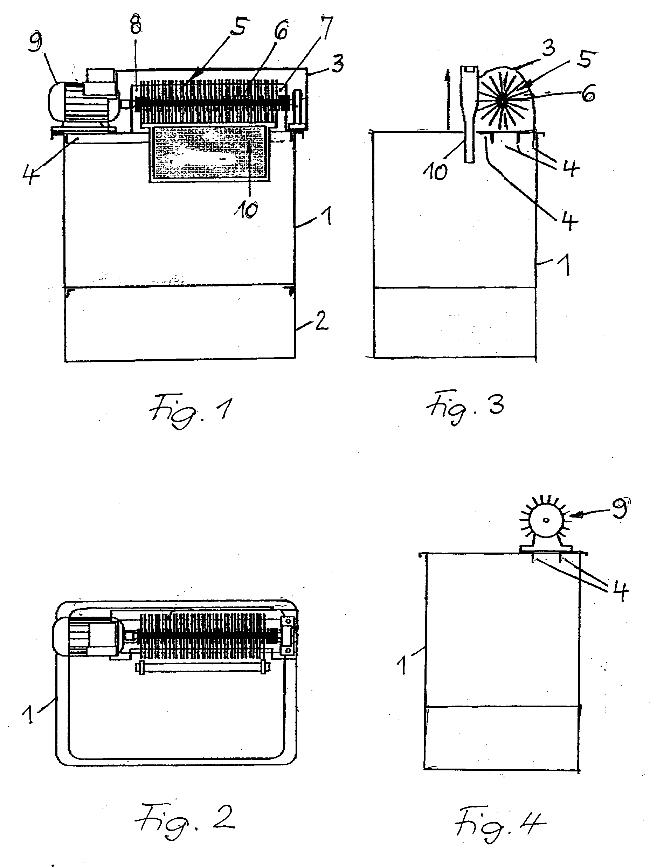

- Fig. 1: eine schematische Seitenansicht einer erfindungsgemäßen Vorrichtung,
- Fig. 2: eine Aufsicht auf die Vorrichtung nach Fig. 1,

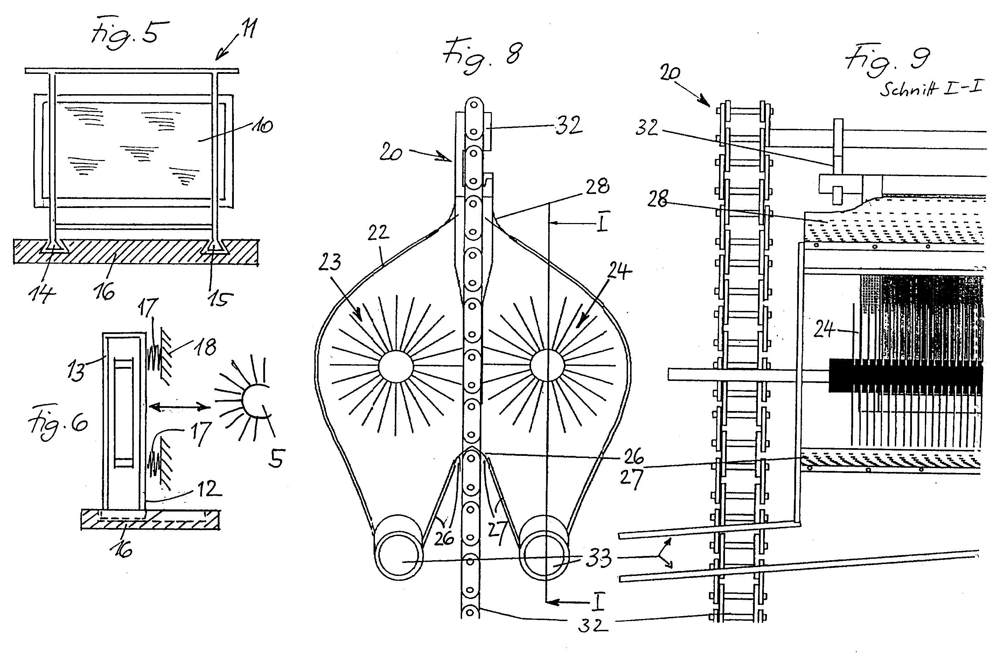

- Fig. 3: eine schematische Darstellung einer Seitenansicht nach Fig. 1 von rechts,
- Fig. 4: eine schematische Darstellung einer Seitenansicht nach Fig. 1 von links,
- Fig. 5: eine schematische Darstellung eines Führungsrahmens für die zu entdeckelnde Wabe in Vorderansicht,
- Fig. 6: die Darstellung nach Fig. 5 in seitlicher Ansicht,
- Fig. 7: eine schematische Darstellung eines vollautomatischen Entdeckelungssystems,
- Fig. 8: eine Darstellung der Entdeckelungsvorrichtung nach Fig. 7 in vergrößertem Maßstab,
- Fig. 9: eine Schnittansicht aus Fig. 8 längs der Schnittlinie I-I,
- Fig. 10: eine spezielle Ausführungsform der Bürste nach der Erfindung in Schrägansicht,
- Fig. 11: eine Abwicklung der Bürste nach Fig. 10, und
- Figuren 12 bis 16: unterschiedliche Ausführungsformen von Bürstenreihen in Abwicklung.

Ein verkleidetes Rahmengehäuse 1 weist im unteren Bereich eine Wanne 2 zum Auffangen der entfernten Wachsdeckel und von Honig, sowie eine vorzugsweise transparente obere Abdeckung 3 auf. Das Rahmengehäuse 1 ist am oberen Ende mit einem Edelstahl-Profilrahmen 4 abgeschlossen, der die eigentliche Entdeckelungsvorrichtung, nämlich die rotierende Walzenbürste 5, deren Welle 6 auf Lagerböcken 7, 8 in Kugellagern gelagert ist, und den die Walzenbürste 5 antreibenden Motor 9 aufnimmt. Die zu entdeckelnde Wabe 10 ist der Walzenbürste so zugeordnet, daß die Walzenbürste 5 bei einer vertikalen Auf-und Abbewegung der Wabe 10 in Eingriff mit der die Wabendeckel enthaltenden Wabenseite kommt, so daß aufgrund der Rotation der Walzenbürste die Borsten elastisch über die Wabendeckel streichen und dabei die Wachsdeckel zerkleinern und auflösen. Die Bewegungsenergie der elastisch nachgiebigen Borsten der Bürste reicht dabei aus, um das relativ weiche Wachs der Wachsdeckel zu entfernen, ist jedoch zu gering, um festere Teile der Wabe, z.B. die Rahmenteile aus Holz oder Kunststoff, oder aber im Falle von Kunststoffwaben den Kunststoff zu lösen, oder z.B. Verletzungen zu verursachen, wenn die Walzenbürste in Eingriff mit der Hand einer Bedienungsperson kommt. Die zu entdeckelnde Wabe 10 wird dabei von Hand auf- und abbewegt und gegen die Bürste gedrückt, damit die Borsten der rotierenden Walzenbürste das Wachsmaterial der Wachsdeckel abarbeiten bzw. abstreifen.

Bei einer Ausführungsform nach Fig. 5, bei der die Honigwabe 10 nicht von Hand, sondern mit Hilfe eines Führungsrahmens an der Walzenbürste 5 vorbeigeführt werden soll, wird hierzu ein Rahmengestell 11 verwendet, in dem die Honigwabe 10 auf- und abbeweglich angeordnet ist. Das Rahmengestell 11 besteht aus einem vorderen und einem hinteren, aus Stäben bestehenden Rahmenteil 12, 13, die beide oben und unten miteinander verbunden sind, wobei oben ausreichend Platz für das Einführen der Honigwabe 10 belassen ist. Das Rahmengestell 11 weist unten Füße 14, 15 auf, die in Längsführungen 16 geführt werden, so daß das Rahmengestell 11 zusammen mit der Honigwabe 10 gegen eine Walzenbürste 5 verschiebbar ist. Das Rahmengestell 11 besitzt ferner an den seitlichen Begrenzungen Federelemente oder elastische Elemente 17, die mit Festanschlägen 18 in Anlage stehen, so daß durch einen Druck auf die Honigwabe 10 die Honigwabe mit dem Rahmengestell 11 näher an die Walzenbürste 5 herangebracht werden kann, um damit die Wirkung der Borsten auf die Wachsdeckel der Honigwabe 10 zu verstärken.

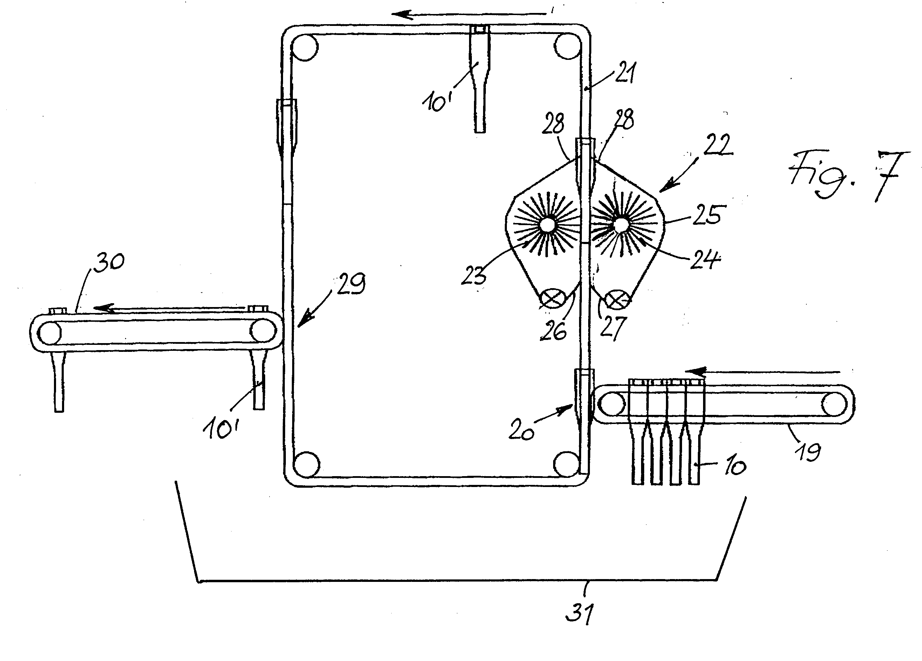

Bei der selbsttätig arbeitenden Anordnung nach Fig. 7 wird eine Vielzahl von Honigwaben 10 über einen Zubringer-Förderer 19 an eine Übergabestelle 20 auf einen Umlaufförderer 21, z.B. ein Karussell übergeben, von wo die einzelnen Honigwaben zum Entdeckeln durch eine Entdeckelungsvorrichtung 22 geführt werden. Diese Entdeckelungsvorrichtung 22 besteht aus zwei miteinander zusammenwirkenden und gleichzeitig auf beide Seiten der Honigwaben 10 einwirkenden Bürsten 23, 24, einem die Bürsten umschließenden Gehäuse 25, Dichtungsklappen 26, 27 am unteren Ende des Gehäuses 25, die das Gehäuse 25 zum Umlaufförderer 21 wie auch den Durchgang der Honigwaben 10 abdichten. Entsprechende Dichtungsvorrichtungen 28 sind am ausgangsseitigen Ende des Gehäuses 25 vorgesehen. Die entdeckelte Honigwabe 10' wird im Umlaufförderer weitertransportiert und an einer Übergabestation 29 an eine Abfördervorrichtung 30 abgegeben, von wo die entdeckelten Honigwaben entfernt werden können. Unterhalb der Gesamtanordnung ist eine Auffangwanne 31 vorgesehen, die die entfernten Deckel und evtl. aus den Honigwaben austretenden Honig aufnehmen. Zuförderer 19 und Abförderer 30 können als Zwischenspeicher ausgebildet oder mit einem Zwischenspeicher gekoppelt sein, der eine entsprechende Menge an Honigwaben bevorraten kann, so daß Zuführung und Abführung der Honigwaben automatisiert werden.

Die Figuren 8 und 9 zeigen eine Ausführungsform der Entdeckelungsvorrichtung nach Fig. 7 im Detail. Der Umlaufförderer 20 bzw. das Karussell ist hierbei als Kettenförderer ausgebildet, an dem Wabentransporthaken befestigt sind. 33 bezeichnet Austrittskanäle des Gehäuses 25, durch die die zerkleinerten Wachsdeckel aus dem Gehäuse 25 entfernt werden.

Der Bürstenkörper 101 hat Zylinderform mit einer Mittenlängsachse 102. Auf seinem Umfang sind in Reihen 103 Vertiefungen 104 zur Aufnahme der Borstenbüschel 105 angeordnet. Die Borstenreihen 103 sind, wie in der Abwicklung nach Fig. 11 dargestellt, in einem Winkel a, etwa zwischen 7 und 50°, vorzugsweise 30°, zur Längsachse 102 schräggestellt angeordnet; sie verlaufen parallel zueinander von einer Stirnseite zur entgegengesetzten Stirnseite des Zylinderkörpers 101. Die Borstenbündel 105 sind in Umfangsrichtung hintereinander im Abstand zueinander versetzt und auf Lücke angeordnet, wobei der Abstand zweier aufeinanderfolgender Reihen 103 ca. 4 mm, und der zweier benachbarter Borstenbündel innerhalb einer Borstenreihe zwischen 6 und 8 mm beträgt. Der Durchmesser des Zylinderkörpers der Bürste mißt bei einer speziellen Ausführungsform 30 mm, die Bürstenlänge 460 mm, die aus der Mantelfläche des Bürstenkörpers vorstehende Länge der Borsten 60 mm, und die Borstenstärke 0,7 mm.

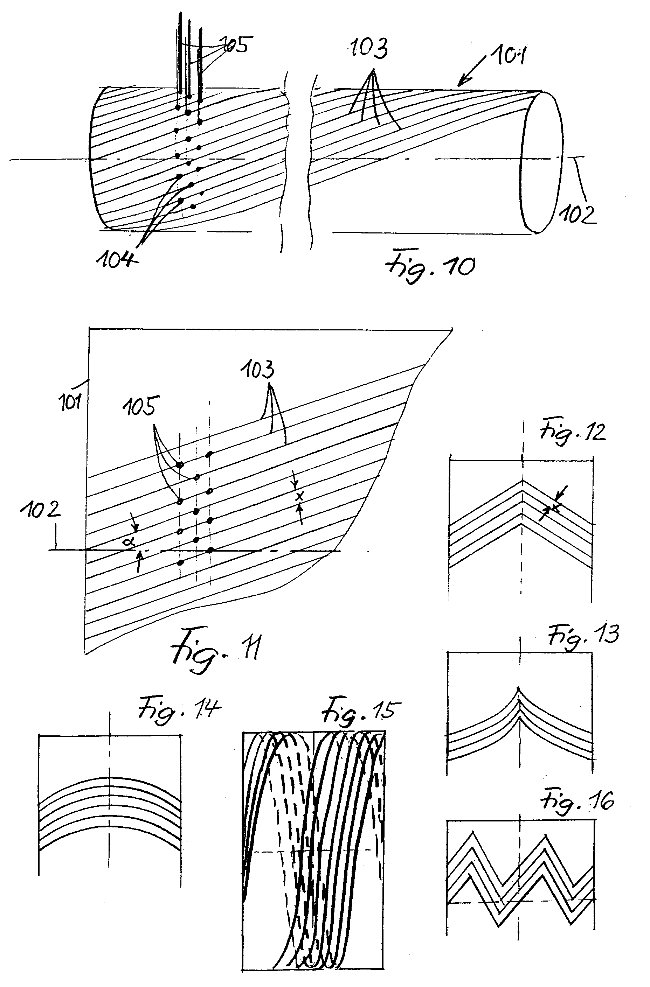

Die Darstellungen nach den Figuren 12, 13, 14, 15 und 16 sind Ausschnitte aus Abwicklungen der Zylinderfläche verschiedener Ausführungsformen von Borstenreihen nach der Erfindung. Die Borstenreihen sind hierbei entweder geradlinig oder gekrümmt ausgeführt, sind jedoch anderweitig nach den Kriterien der Darstellungen in den Figuren 10 und 11 ausgelegt.

Bei abgeänderten Ausführungsformen der Erfindung sind die Borstenreihen nicht fortlaufend über den gesamten Umfang der Bürstenoberfläche angeordnet, sondern mehrere aneinander anschließende Borstenreihen durch freibleibende Borstenreihen bzw. freibleibende Mantelflächenteile abgelöst. Beispielsweise können mehrere Borstenreihen, etwa zwischen drei und sechs aufeinanderfolgenden Reihen, jeweils um 90° versetzt über der Bürstenoberfläche verteilt angeordnet sein, so daß z.B. bei vier Gruppen von Borstenreihen diese Gruppen jeweils einen Abstand von etwa 90° voneinander in Umfangsrichtung aufweisen. Entsprechend stellen die Ausführungen nach den Figuren 12 - 16 jeweils eine derartige Gruppe von Brostenreihen dar.

## Patentansprüche

1. Vorrichtung zum Entdeckeln von verdeckelten Honigwaben, mit einem Rahmengehäuse (1), einer Führungshalterung (8) auf dem Rahmengehäuse, und mindestens einer zylindrischen Bürste (5), die auf der Führungshalterung mit einer hohen Drehzahl drehbar so aufgenommen ist, daß sie in Eingriff mit den Deckeln der Honigwaben gebracht werden und diese beseitigen kann, und die eine Vielzahl von Borstenreihen bzw. Borstenbüschelreihen aufweist, wobei die Borsten bzw. Borstenbüschel über die Umfangsfläche der Bürste in parallelen, axialen Reihen gleichförmig verteilt sind,
**dadurch gekennzeichnet**, daß
a) die Borsten der Bürste elastisch auslenkbar sind und aus einem hochverschleißfesten lebensmittelechten Kunststoffmaterial, z.B. Nylon, Rilsan, Polyimid oder Aramid bestehen,
b) die Bürste mit einer Drehzahl von ca. 3000 U/min angetrieben wird,
c) die Bürstenreihen im spitzen Winkel zur Längsachse des Bürstenkörpers verlaufen und spiralförmig, pfeilförmig oder dgl. zur Längsachse um den Umfang des Bürstenkörpers angeordnet sind,
d) die einzelnen Borsten bzw. Borstenbüschel zweier benachbarter Borsten- bzw. Borstenbüschelreihen in Drehrichtung im Abstand zueinander versetzt und auf Lücke zueinander angeordnet sind.

2. Vorrichtung nach Anspruch 1, dadurch gekennzeichnet, daß bei pfeilförmigen Borstenreihen die Pfeilspitze in der Mitte des Bürstenkörperumfanges liegt.

3. Vorrichtung nach Anspruch 1 oder 2, dadurch gekennzeichnet, daß der Abstand zweier benachbarter Borstenreihen voneinander etwa 4 mm beträgt.

4. Vorrichtung nach Anspruch 1, dadurch gekennzeichnet, daß der Winkel (α) jeder Borstenreihe und der Längsachse der Bürste zwischen 7 und 50° beträgt.

5. Vorrichtung zum selbsttätigen Entdeckeln von verdeckelten Honigwaben mit einer Entdeckelungsvorrichtung nach Anspruch 1, einem Umlaufförderer (21), der die Honigwaben an der Entdeckelungsvorrichtung vorbeibewegt, einem Zuführförderer (19), der die Honigwaben an den Umlaufförderer übergibt, und einem Abförderer (30), der dem Umlaufförderer so zugeordnet ist, daß die Honigwaben abgeführt werden, dadurch gekennzeichnet, daß
a) der Zuführförderer (19) und der Abförderer (30) als Zwischenspeicher bzw. Magazine für Honigwaben ausgebildet sind, und
b) der Umlaufförderer (21) ein geschlossenes Karussell ist, das die einzelnen Honigwaben in aufrechter, nach abwärts gerichteter Stellung den gesamten Weg vom Zuführförderer zum Abförderer transportiert.

## Claims

1. Device for uncapping lidded honeycombs comprising a frame casing (1), a support device (8) on top of said frame casing, and at least a cylindrical brush (5) supported by said support device for rotation thereon with high speed and for engaging and removing the lids from the honeycomb cells, and provided with a plurality of rows of bristles or rows of bundles of bristles, whereby the bristles or the bundles of bristles are uniformly distributed across the peripheral surface of the brush in parallel, axial rows,
characterised in that
a) the bristles of the brush are flexible and are made of high wear-resistant plastic material suitable for foodstuff, f.e. nylon, rilsan, polyimide or aramide,
b) the brush is rotated with a speed of about 3000 U/min,
c) the rows of bristles are arranged in an acute angle to the longitudinal axis of the body of the brush and are arranged in the shape of spirals, arrows or the like relative to the longitudinal axis around the periphery of the body of the brush,
d) the individual bristles resp. brush bristles of two adjacent rows of bristles or bundles of bristles are arranged distant and staggered from each other in the rotational direction.

2. Device according to claim 1, characterised in that with acute rows of bristles the tip of the arrow is positioned in the center of the periphery of the body of the brush.

3. Device according to claim 1 or 2, characterised in that the distance between two adjacent rows of bristles is about 4 mm.

4. Device according to claim 1, characterised in that the angle α between each row of bristles and the longitudinal axis of the brush is between 7 and 50°.

5. Apparatus for automatically uncapping lidded honeycombs with an uncapping device according to claim 1, a rotating conveyor (21), which moves the honeycombs past the uncapping device, a feeding conveyor (19), which transports the honeycombs onto the rotating conveyor, and a discharge conveyor (30) associated with the rotating conveyor so that the honey combs are discharged, characterised in that
a) the feeding conveyor (19) and the discharge conveyor (30) are provided as intermediate storages resp. magazines for honeycombs, and
b) the rotating conveyor (21) is a closed carousel, which transports the individual honeycombs in an upright, downwardly directed position all the way down from the feeding conveyor to the discharge conveyor.

## Revendications

1. Dispositif destiné à désoperculer les rayons de miel recouverts de l'opercule, comprenant un boîtier (1), une fixation de guidage (8) montée sur le boîtier, et au moins une brosse cylindrique (5) pouvant tourner selon une vitesse de rotation élevée et qui est maintenue sur la fixation de guidage de manière telle qu'elle peut être amenée en engrenage avec les opercules des rayons de miel et les détruire, ladite brosse cylindrique présentant plusieurs rangées de poils, respectivement plusieurs rangées de touffes de poils, les poils, respectivement les touffes de poils étant répartis uniformément sur la surface périphérique de la brosse en rangées parallèles dans le sens axial,
**caractérisé en ce que**
a) les poils de la brosse sont élastiques et se composent d'une fibre synthétique résistant fortement à l'usure, telle que par exemple le nylon, le rilsan, le polyimide ou l'aramide,
b) la brosse est entraînée selon une vitesse de rotation d'environ 3000 tours/minute,
c) les rangées de poils sont orientées à l'angle de sommet par rapport à l'axe longitudinal du corps de brosse et sont disposées en forme de spirale, de flèche ou autre forme de ce type par rapport à l'axe longitudinal autour de la périphérie du corps de brosse;
d) les poils individuels, respectivement les touffes de poils individuelles de deux rangées de poils voisines, respectivement de deux rangées de touffes de poils voisines sont décalés d'une certaine distance l'un par rapport à l'autre dans le sens de rotation et sont disposés sur des creux.

2. Dispositif selon la revendication 1**, caractérisé en ce que** dans le cas de rangées de poils en forme de flèche, le sommet de la flèche se trouve au centre de la périphérie du corps de brosse.

3. Dispositif selon l'une ou l'autre des revendications 1 et 2, **caractérisé en ce que** la distance séparant deux rangées de poils voisines atteint environ 4 mm.

4. Dispositif selon la revendication 1, **caractérisé en ce que** l'angle (α) séparant chaque rangée de poils de l'axe longitudinal de la brosse est compris entre 7 et 50°.

5. Dispositif destiné à désoperculer par un procédé automatique les rayons de miel recouverts de l'opercule comprenant un dispositif à désoperculer conforme à la revendication 1, un transporteur circulaire (21), qui amène les rayons de miel contre le dispositif à désoperculer, un dispositif d'amenée (19) qui transmet les rayons de miel au transporteur circulaire, et un transporteur d'évacuation (30) adjoint au transporteur circulaire de telle sorte que les rayons de miel peuvent être évacués, **caractérisé en ce que**
a) le dispositif d'amenée (19) et le transporteur d'évacuation (30) sont conçus comme des réservoirs intermédiaires respectivement comme des magasins pour les rayons de miel, et
b) le transporteur circulaire (21) forme un circuit fermé qui transporte les différents rayons de miel en position verticale et vers le bas tout le long du parcours reliant le dispositif d'amenée au transporteur d'évacuation.
